# EUROPEAN PATENT SPECIFICATION

(11) **EP 0 520 430 B1**
(45) Date of publication and mention of the grant of the patent: **18.12.1996**
(21) Application number: 92110681.1
(22) Date of filing: 25.06.1992
(51) Int. Cl.: H04N 1/028

(54) **Image sensor**
Bildlaser
Capteur d'image

(30) Priority: 27.06.1991 JP 156366/91; 25.09.1991 JP 245417/91; 25.09.1991 JP 245418/91; 27.09.1991 JP 249537/91
(43) Date of publication of application: 30.12.1992
(73) Proprietor: ROHM CO., LTD., Kyoto-shi Kyoto 615 (JP)
(72) Inventor: Imamura, Masaya, c/o Rohm Co., Ltd., Kyoto-shi, Kyoto (JP); Ogata, Hiromi, c/o Rohm Co., Ltd., Kyoto-shi, Kyoto (JP); Koshikawa, Seiji, c/o Rohm Co., Ltd., Kyoto-shi, Kyoto (JP); Sawase, Kensuke, c/o Rohm Co., Ltd., Kyoto-shi, Kyoto (JP)
(74) Representative: Pellmann, Hans-Bernd, Dipl.-Ing.

(56) References cited:
- EP-A- 0 438 104
- DE-A- 3 716 809
- GB-A- 2 228 366

## Description

### BACKGROUND OF THE INVENTION

### Field of the Invention:

The present invention relates to an image sensor suitable for use in facsimile machines, optical character reader and the like.

### Description of the Related Art:

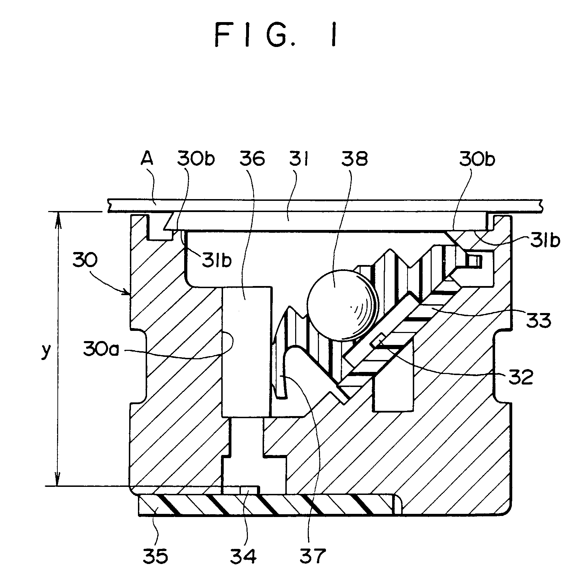

One of the conventional image sensors is shown in Fig. 1 which is a cross-sectional view of the primary parts of the image sensor, taken along a plane perpendicular to a line-like light receiving element. The image sensor comprises a frame 30, a transparent cover 31 of for instance, glass mounted on the top of the frame, a light emitting element 32 on a base plate 33 which is mounted in the frame 30, and a light receiving element 34 on a base plate 35 which is mounted on the bottom of the frame 30. The base plate 33 also supports a resilient member 37 which resiliently urges and holds an optical system (gradient index type lens array) 36 against the inner wall 30a of the frame 30. The optical axis of the optical system 36 is perpendicular to the glass cover 31 and base plate 35. The resilient member 37 also supports a spherical plastic lens 38 directly above the light emitting element 32.

An object to be detected A (e.g. original document) is placed on the glass cover 31. Light rays emitted from the light emitting element 32 irradiate the original document A on the glass cover 31 through the plastic lens 38 with an angle of about 45 degrees relative to the plane of the glass cover 31. Light rays are then reflected by the document A toward the optical system 36 in the vertical direction. After passed through the optical system 36, the light rays are received by the light receiving element 34 wherein they are converted into electrical signals.

In such an arrangement, it is essential that a distance y from the original document A to the light receiving plane (more accurately, the light receiving element 34) is equal to at least the conjugate length of the optical system 36. This is the primary cause of precluding the prior art image sensors from being reduced in size.

Since the aforementioned arrangement of the base plates 33 and 35 must be maintained in the image sensor, it is required that the light emitting and receiving elements 32, 34 are separately produced on the respective base plates 33 and 35. This precludes reduction of the manufacturing cost.

As can be seen from Fig. 1, the frame 30 in the conventional image sensor are usually of rectangular, square or similar cross-section. If such an image sensor is to be installed into an electronic instrument such as a facsimile machine or the like, it is required to utilize threaded apertures and/or reference apertures which have been accurately formed in the image sensor frame and electronic instrument, considering the alignment of the image sensor frame with the platen roller of the electronic instrument. Such an installing operation is very cumbersome with the positional alignment being very difficult to accomplished.

In the aforementioned image sensor, the base plate 33 was usually coated with a green-colored resist. Thus, the reflectivity at the base plate 33 would be reduced. In order to increase the amount of light irradiating the object to be scanned, the amount of current in the image sensor must be increased or the light emitting element must be improved in performance. This raises a problem with respect to power consumption or manufacturing cost.

In the aforementioned image sensor of the prior art, the glass cover 31 is usually bonded at its peripheral edge 31b to the top face 30b of the frame 30 through any suitable adhesive.

The adhesive tends to deposit at portions of the glass cover 31 other than its peripheral edge. An excess of the adhesive used tends to be forced out inwardly from the marginal area of the glass cover 31. This adversely affects the characteristic of light detection in the light receiving element. Since the process cannot go to the next step until the adhesive is completely dried, the use of adhesive is disadvantageous in improving the productivity.

A similar sensor is disclosed in DE-A-3 716 809.

### SUMMARY OF THE INVENTION

It is therefore an object of the present invention to provide a small-sized image sensor which has a decreased distance perpendicular to the transparent cover, which can be more easily installed into any electronic instrument and which has an improved efficiency in packaging and/or transporting.

Another object of the present invention is to provide an image sensor which has a minimized light loss.

Still another object of the present invention is to provide an image sensor in which the transparent cover can be mounted without the need for any adhesive.

To this end, the present invention provides an image sensor for irradiating light rays onto an object to be detected and for converting the light rays reflected from the object to be detected into electrical signals, the image sensor comprising:
a transparent cover on which an object to be detected is placed;
a light emitting section for irradiating light rays onto the object to be detected through the transparent cover;
a condensing lens for receiving and condensing the light rays reflected from the object to be detected through the transparent cover; a frame for mounting said transparent cover on the one end and mounting said light emitting section, condensing lens and light receiving section therein; and
a light receiving section for receiving the light rays from the condensing lens and for converting the received light rays into electrical signals,
the light emitting section being so arranged that the light rays emitted therefrom will enter the surface of the transparent cover in a direction substantially perpendicular thereto, the condensing lens being so arranged that the optical axis thereof is inclined relative to the surface of the transparent cover, and the cross-section of the frame being tapered toward the transparent cover.

The image sensor can be more easily installed into any electronic instrument such as a facsimile machine or the like and can be packaged more efficiently.

It is preferred that the peripheral surface of a base plate around the portion thereof on which the light emitting section is mounted is increased in reflectivity. This reduces the light loss around this area.

The lower portion of the frame is provided with a projection which contacts part of the surface of the base plate. The base plate is biased against the projection through a leaf spring engaging the underside of the base plate. This can simplify the manufacturing process.

The transparent cover is housed within a recess formed on the top of the frame. Thus, the transparent cover can be mounted in the frame without the need for any adhesive which would be forced out inwardly from the top of the frame to deteriorate the transmissivity in the transparent cover.

By the use of such an image sensor, one can more easily obtain an electronic instrument.

An image sensor according to the invention is defined in claim 1.

### BRIEF DESCRIPTION OF THE DRAWINGS

Fig. 1 is a cross-sectional view of the primary parts of an image sensor constructed in accordance with the prior art.

Fig. 2 is a cross-sectional view of the primary parts of an image sensor which is constructed in accordance with one embodiment of the present invention.

Fig. 3 is a schematic view of an image sensor mounted in a facsimile.

Figs. 4A and 4B show packs of image sensors constructed respectively in accordance with the prior art and the present invention.

Fig. 5 is a cross-sectional view of the primary parts of an image sensor which is constructed in accordance with another embodiment of the present invention.

Fig. 6 is an enlarged cross-sectional view of a base plate in the image sensor shown in Fig. 5.

Fig. 7 is a side view of an image sensor constructed in accordance with still another embodiment of the present invention.

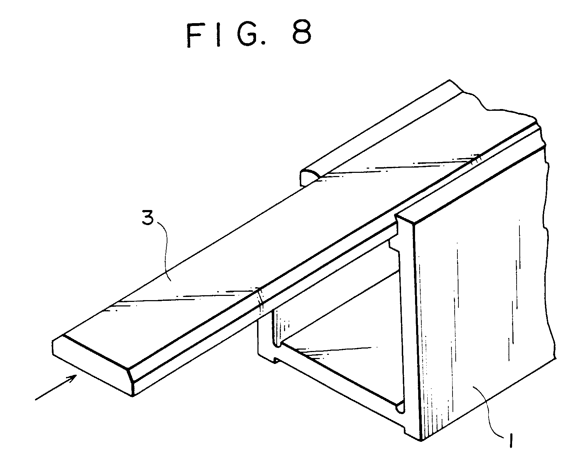

Fig. 8 is a perspective view of a frame into which a transparent cover is being inserted, with some parts being omitted for clarification.

Fig. 9 is a perspective view of a side plate being mounted on the end of the frame, with some parts being omitted for clarification.

### DETAILED DESCRIPTION OF THE PREFERRED EMBODIMENTS

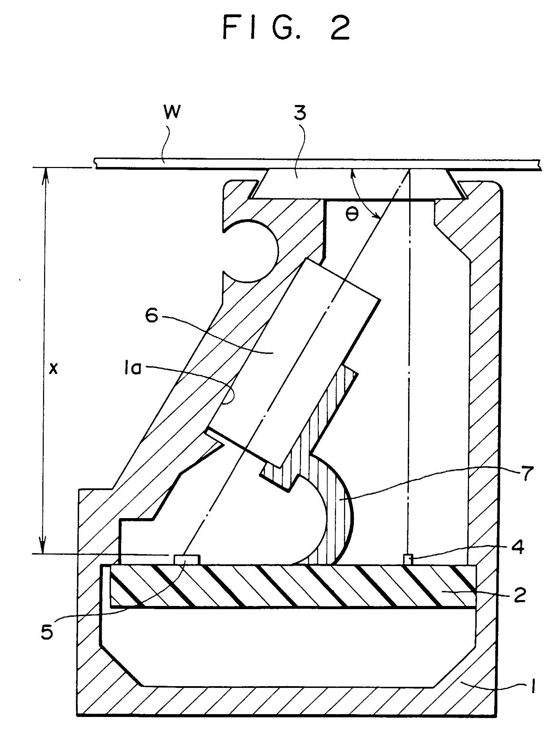

Referring first to Fig. 2, there is shown an image sensor which comprises a frame 1 of aluminum, a base plate 2 mounted in the lower portion of the frame 1 and a transparent cover 3 of glass mounted in the top portion of the frame 1. The base plate 2 includes a light emitting element 4 formed of an LED chip or the like formed thereon, a light receiving element 5 formed of a photodiode chip or the like similarly formed on the base plate 2, and any suitable wiring pattern formed over the surface of the base plate 2.

An optical system (gradient index type lens array) 6 is biased and firmly held against the inner wall 1a of the frame 1 through a lens holding member 7 which is mounted in the frame 1. In this embodiment, the light emitting element 4 is positioned vertically directly below the glass cover 3 while the optical system 6 is located having its optical axis inclined relative to the plane of the glass cover 3 by an angle θ. The light receiving element 5 is positioned on the optical axis of the optical system 6.

In such an arrangement, light rays emitted from the light emitting element 4 as shown by an alternate long and short dashed line in Fig. 2 impinge on an original document W which is an object to be detected placed on the glass cover 3 in the direction substantially perpendicular to the plane of the document W. The light rays are then reflected by the original document W in a direction inclined relative to the glass cover 3 by the angle θ. The reflected light rays pass through the optical system 6 and thereafter are received by the light receiving element 5 wherein the light rays are converted into electrical signals.

All of the light emitting element 4, light receiving element 5 and optical system 6 are elongated in the direction perpendicular to the plane of the drawing. Thus, the electrical signals will be obtained for one line at a time. When the original document W is moved to the right or left as viewed in Fig. 2, data for the next line can be read out by the image sensor.

In this embodiment, the angle θ included between the plane of the glass cover 3 and the optical axis of the optical system 6 is equal to about 60 degrees. In such a case, a distance x from the original document W on the glass cover 3 to the surface of the base plate 2 receiving the reflected light rays (more accurately, the light receiving element 5) can be decreased to about 15% smaller than the conjugate length of the optical system 6. Therefore, the thickness of the image sensor can be reduced correpondingly. Since the light emitting and receiving elements 4 and 5 are located on the same base plate 2, the necessary number of base plates to be used in the same image sensor can be decreased. Since the light emitting and receiving elements 4 and 5 can be manufactured simultaneously on the same base plate, the number of steps for manufacturing the image sensor can be reduced. Even if the angle θ is equal to any value other than 60 degrees, the distance x may be similarly reduced either more or less.

The frame 1 has its cross-sectional configuration tapered toward the top thereof. In other words, the frame 1 has one inclined side wall which is engaged at its inner face by the rod lens array 6 having the optical axis that is inclined relative to the plane of the transparent cover 3.

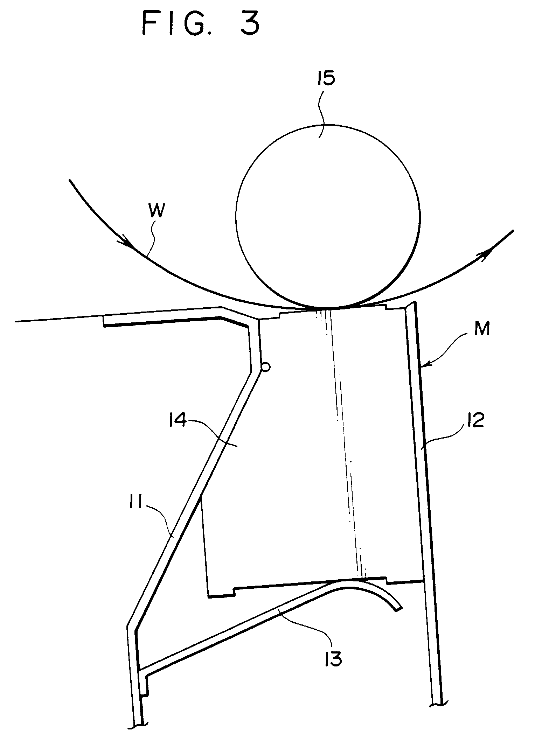

When the image sensor is to be assembled into an electronic instrument, for example, into a facsimile machine, the image sensor 14 can be simply and easily positioned in place only by inserting it between two opposed guides 11 and 12 which have been previously formed in the main body M of the facsimile machine, as shown in Fig. 3. The image sensor 14 can be firmly urged and held against a platen roller 15 under the influence of a leaf spring 13 which has been mounted on the guide 11. The image sensor 14 can be more easily installed into the electronic instrument because the outline of the image sensor 14 is used as a reference on assembling.

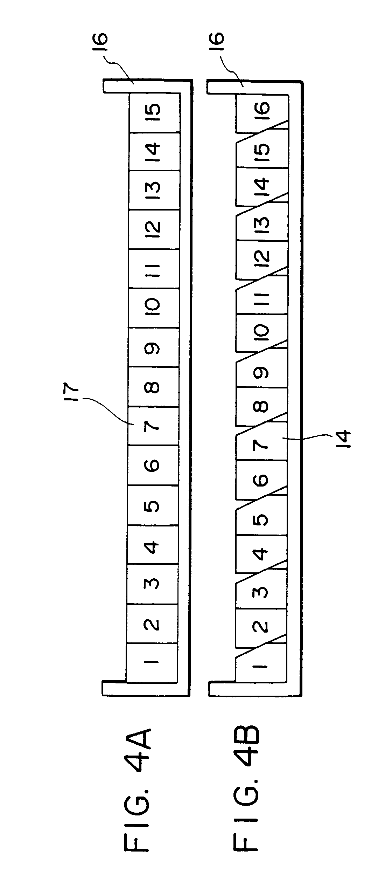

If a plurality of image sensors having the same lateral width are to be packed into a package box 16, as shown in Figs. 4A and 4B, the image sensors 14 of the present invention may be packed in the box 16 by one more than the number of the image sensors 17 according to the prior art. This is because the tapered image sensors of the present invention can be positioned alternately upside down.

The tapered configuration of the frame 1 in the image sensor is variable depending on the desired purpose. Particularly, if the angle of the inclined rod lens array 6 is changed from one to another, the configuration of the frame 1 can be varied.

Since the image sensor constructed in accordance with the above embodiment of the present invention has the frame having its cross-sectional configuration tapered toward the transparent cover on the top thereof, it provides the following advantages:
(1) Since the outline of the image sensor can be used as a reference on assembling it into the electronic instrument, the image sensor may be easily assembled into the electronic instrument.
(2) Since the number of image sensors which may be housed within a package box is increased, the efficiency of transportation may be improved.

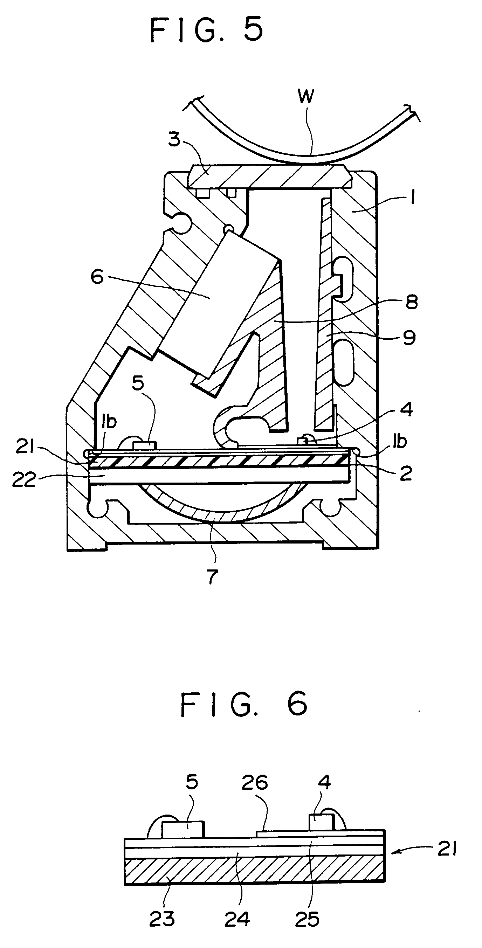

Fig. 5 shows another embodiment of an image sensor constructed in accordance with the present invention. In this embodiment, the base plate 2 is upwardly biased by means of a U-shaped leaf spring 7 which is located on the inner bottom of the frame 1. The top face of the base plate 2 is engaged, at its periphery, by a shoulder 1b which is formed on the inner wall of the frame 1. In such a manner, the top face of the base plate 2, which includes light emitting and receiving elements 4 and 5 as in the first mentioned embodiment, is used as a reference on assembling. The focusing of the light receiving element 5 relative to the rod lens array 6 can be better performed irrespectively of the accuracy in the frame 1. The U-shaped leaf spring 17 consists of two U-shaped leaf spring elements each of which has a length equal to one-half of the length of the image sensor and which is inserted into the interior of the frame 1 from each end.

The frame 1 has an inner wall located to the right as viewed in Fig. 5, on which a reflection plate 9 is mounted to conduct the light rays from the light emitting element 4 to the original document W in an efficient manner. The lens holding member 8 has a flat wall opposed to the reflection plate 9 and formed to have a light reflecting property.

The light emitting and receiving elements 4 and 5 on the base plate 2 linearly extend along the length of the base plate 2. On the other hand, the frame 1 is also elongated along the length thereof and closed by a cover at each end. Each of the covers includes an inner light reflecting surface. In this embodiment, therefore, the optical path from the light emitting element 4 to the glass cover 3 will be completely enclosed by the light reflecting walls which may be made of any colored material having a good reflectivity such as white-colored resist.

The base plate 2 comprises first and second base plate sections 21, 22. As shown in Fig. 6, the first base plate section 21 comprises a base material 23, a copper pattern portion 24 formed over the base material 23, a green-colored resist layer 25 formed over the copper pattern portion 24 and a white-colored resist layer 26 formed on the green-colored resist layer 25 around the light emitting element 4. The light emitting element 4 is mounted on the white-colored resist layer 26 while the light receiving element 5 is mounted on the green-colored resist layer 25.

In such an arrangement, the light emitting element 4 is located directly below the glass cover 3. The optical path is enclosed by the light reflecting walls 8 and 9. The surface of the base plate 2 around the light emitting element 4 is white-colored. The light receiving element 5 is located on the optical axis of the rod lens array 6. The surface of the base plate 2 around the light receiving element 5 is green-colored. Thus, light rays emitted from the light emitting element 4 are repeatedly reflected by the white-colored resist layer 26 and light reflecting walls 8, 9 and thereafter irradiated onto the original document W on the glass cover 3. This means that the loss of light between the light emitting element 4 and the original document W can be minimized.

The light rays are further reflected by the original document W toward the rod lens array 6. After passing through the rod lens array 6, the light rays are received by the light receiving element 5 wherein they are converted into electrical signals. Light rays which enter the green-colored resist layer 25 rather than the light receiving element 5 are absorbed by the green-colored resist layer 25 so that the light receiving property of the light receiving element 5 will not be adversely affected by irregular reflection.

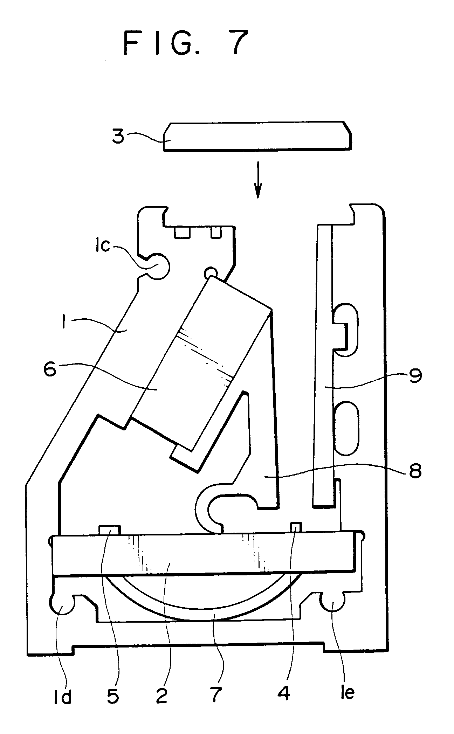

Fig. 7 is a schematic side view of the image sensor shown in Fig. 5 with one end plate being removed. As seen from Fig. 7, the glass cover 3 is in the form of a plate glass of rectangular cross-section, the opposite top side edges being chamfered. The inner top edges of the frame 1 extend inwardly to accommodate themselves to the chamfered plate glass. The frame 1 further includes three circular notches 1c, 1d and 1e which are formed therein at each end and used to mount the end plate on the frame 1 in such a manner as will be described later.

The glass cover 3 can be mounted in the frame 1 by inserting the glass cover 3 into the top of the frame 1 from one end. The aforementioned accommodation between the glass cover 3 and the top of the frame 1 facilitates the insertion of the glass cover 3 into the top of the frame 1. This also means that any possible strain in the frame 1 is additionally corrected by the insertion of the glass cover 3.

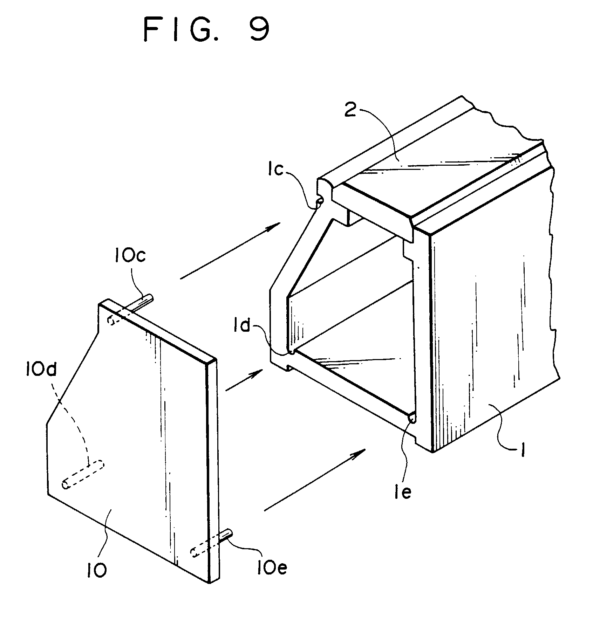

As shown in Fig. 9, an end plate 10 identical with each end of the frame 1 in outline and size is mounted on the corresponding end of the frame 1 by inserting pin 10c, 10d and 10e on the end plate 10 into the respective notches 1c, 1d and 1e of the frame 1. Thus, the opposite ends of the frame 1 are closed with the glass cover 3 being firmly fixed to the frame 1.

There may be some play between the frame 1 and the glass cover 3. However, when the image sensor is actually assembled into the electronic instrument such as a facsimile machine, the glass cover 3 will be held down against the frame 1 by the platen roller to eliminate any such play. In addition, the end plates 10 may be adhered or screwed to the frame 1 rather than being held by the pin-notch attachment described.

The image sensor of this embodiment is advantageous in the following respects:
(1) Since the transparent cover can be mounted in the frame without need for any adhesive, the light detection in the light receiving element will not be adversely affected by any excessive forced out adhesive.
(2) Since no adhesive is used to mount the transparent cover on the frame, the assembled parts can be transferred to the subsequent step immediately after the transparent cover has been mounted on the frame. This improves the producibility.
(3) Since the transparent cover is inserted into the top of the frame, any strain in the frame can be corrected.

An image sensor has a frame, a transparent cover which is mounted on the top of the frame and on which an original document is to be placed, and a base plate disposed within the frame. On the base plate, there are mounted a light emitting section, a lens for condensing the reflective light and a light receiving section.

The base plate is disposed within the frame so that the light emitting section is located directly below the transparent cover and the optical axis of the condensing lens is inclined relative to the plane of the transparent cover. Light rays emitted from the light emitting section enter the transparent cover in a direction substantially perpendicular to the plane thereof and are reflected by the transparent cover slantingly toward the light receiving section. By arranging the condensing lens inclined relative to the plane of the transparent cover, the vertical distance between the light receiving section and the transparent cover can be reduced. The entire configuration of the frame is tapered toward the transparent cover on the top thereof. Thus, the image sensor can be more easily assembled into any electronic instrument. The light emitting section is enclosed by walls which are increased in reflectivity, resulting in an increase of the amount of irradiating light. The condensing lens can be mounted and held in a recess formed in the top of the frame without the need for any adhesive.

## Claims

1. An image sensor for irradiating light rays onto an object (W) to be reproduced, and for converting the light rays reflected from the object (W) into electrical signals, said image sensor comprising a transparent cover (3) on which the object (W) can be placed, a light emitting section (4) for irradiating light rays onto the object (W) through said transparent cover (3), a condensing lens (6) for receiving and condensing the light rays reflected from the object (W) through said transparent cover (3), a light receiving section (5) for receiving the light rays from said condensing lens (6) and for converting the received light rays into electrical signals, and a frame (1) for mounting said transparent cover (3) on one end, and for mounting said light emitting section (4), said condensing lens (6) and said light receiving section (5) therein, **characterized in that** said light emitting section (4) is arranged such that the light rays emitted therefrom enter the surface of said transparent cover (3) in a direction substantially perpendicular thereto, and that said condensing lens (6) is arranged such that the optical axis thereof is inclined (angle Θ) relative to the surface of said transparent cover (3), wherein said light emitting section (4) and said light receiving section (5) are mounted on a single base plate (2), and the cross-section of said frame (1) is tapered toward said transparent cover (3).

2. An image sensor according to claim 1, wherein said frame (1) has one side wall located on the side of said light emitting section (4) and extending perpendicular to the plane of said transparent cover (3), and another side wall located on the side of said light receiving section (5) and being inclined relative to the plane of said transparent cover (3).

3. An image sensor according to claim 2, wherein said other side wall located on the side of said light receiving section (5) supports said condensing lens (6).

4. An image sensor according to one of the preceding claims, wherein the surface of said base plate (2) around said light emitting section (4) is reflective.

5. An image sensor according to claim 4, wherein said surface of said base plate (2) around said light emitting section (4) is white-colored.

6. An image sensor according to claim 5, wherein the lower portion of said frame (1) includes an inwardly projecting portion (1b) formed therein to contact a part of the surface of said base plate (2), and wherein said base plate (2) is urged and held against said inwardly projecting portion (1b) through a leaf spring (17) engaging the underside of said base plate (2).

7. An image sensor according to claim 1, further comprising a partition (8) for dividing a space above said base plate (2) into two space portions for said light emitting section (4) and said light receiving section (5), respectively.

8. An image sensor according to claim 7, wherein said partition (8) also serves as a lens holding member for said condensing lens.

9. An image sensor according to claim 8, wherein the surface of said lens holding member (8) on the side of said light emitting section (4) is reflective.

10. An image sensor according to claim 9, wherein the inner wall of said frame (1) opposed to the surface of said lens holding member (8) on the side of said light emitting section (4) supports a light reflecting plate (9).

11. An image sensor according to claim 1, wherein said transparent cover (3) is housed within a recess formed in the top of said frame (1).

12. An image sensor according to claim 11, wherein the top opposite side edges of said transparent cover (3) are chamfered, and wherein said recess is formed to match said chamfered side edges of said transparent cover (3), so that said chamfered side edges of said transparent cover (3) are covered by the inner top edges of said frame (1).

13. An electronic instrument comprising an image sensor according to one of the preceding claims.

## Patentansprüche

1. Bildsensor zum Bestrahlen von Lichtstrahlen auf einen wiederzugebenden Gegenstand (W) und zum Umwandeln der von dem Gegenstand (W) reflektierten Lichtstrahlen in elektrische Signale, wobei der Bildsensor folgendes aufweist: eine transparente Abdeckung (3), auf der der Gegenstand (W) anordenbar ist, einen lichtaussendenden Abschnitt (4) zum Bestrahlen von Lichtstrahlen auf den Gegenstand (W) durch die transparente Abdeckung (3), eine Sammellinse (6) zum Aufnehmen und Sammeln der von dem Gegenstand (W) reflektierten Lichtstrahlen durch die transparente Abdeckung (3), einen lichtaufnehmenden Abschnitt (5) zum Aufnehmen der Lichtstrahlen von der Sammellinse (6) und zum Umwandeln der aufgenommenen Lichtstrahlen in elektrische Signale, und einen Rahmen (1) zum Montieren der transparenten Abdeckung (3) auf einem Ende und zum Montieren des lichtaussendenden Abschnitts (4), der Sammellinse (6) und des lichtaufnehmenden Abschnitts (5) in ihm,
**dadurch gekennzeichnet, daß**
der lichtaussendende Abschnitt (4) so angeordnet ist, daß die von ihm ausgesandten Lichtstrahlen auf der Oberfläche der transparenten Abdeckung (3) aus einer Richtung eintreten, die im wesentlichen senkrecht zu dieser ist, und die Sammellinse (6) so angeordnet ist, daß deren optische Achse bezogen auf die Oberfläche der transparenten Abdeckung (3) geneigt (Winkel e) ist, wobei der lichtaussendende Abschnitt (4) und der lichtaufnehmende Abschnitt (5) auf einer einzelnen Grundplatte (2) montiert sind und der Querschnitt des Rahmens (1) zu der transparenten Abdeckung (3) hin zugespitzt ist.

2. Bildsensor nach Anspruch 1, wobei der Rahmen (1) eine an der Seite des lichtaussendenden Abschnitts (4) angeordnete Seitenwand hat, die sich senkrecht zu der Ebene der transparenten Abdeckung (3) erstreckt, und eine andere an der Seite des lichtaufnehmenden Abschnitts (5) angeordnete Seitenwand hat, die gegenüber der Oberfläche der transparenten Abdeckung (3) geneigt ist.

3. Bildsensor nach Anspruch 2, wobei die andere Seitenwand, die an der Seite des lichtaufnehmenden Abschnitts (5) angeordnet ist, die Sammellinse (6) stützt.

4. Bildsensor nach einem der vorangehenden Ansprüche, wobei die Oberfläche der Grundplatte (2) um den lichtaussendenden Abschnitt (4) reflektierend ist.

5. Bildsensor nach Anspruch 4, wobei die Oberfläche der Grundplatte (2) um den lichtaussendenden Abschnitt (4) weiß gefärbt ist.

6. Bildsensor nach Anspruch 5, wobei der untere Abschnitt des Rahmens (1) einen nach innen vorstehenden Abschnitt (1b) umfaßt, der darin gebildet ist, um einen Teil der Oberfläche der Grundplatte (2) zu berühren, und wobei die Grundplatte (2) gegen den nach innen vorstehenden Abschnitt (1b) durch eine Blattfeder (17) gedrückt und gehalten wird, die mit der Unterseite der Grundplatte (2) im Eingriff steht.

7. Bildsensor nach Anspruch 1, der desweiteren eine Aufteilung (8) zum Teilen eines Raumes über der Grundplatte (2) in zwei Raumabschnitte für den lichtaussendenden Abschnitt (4) beziehungsweise den lichtaufnehmenden Abschnitt (5) aufweist.

8. Bildsensor nach Anspruch 7, wobei die Aufteilung (8) auch als Linsenhalteelement für die Sammellinse dient.

9. Bildsensor nach Anspruch 8, wobei die Oberfläche des Linsenhalteelements (8) auf der Seite des lichtaussendenden Abschnitts (4) reflektierend ist.

10. Bildsensor nach Anspruch 9, wobei die der Oberfläche des Linsenhalteelements (8) auf der Seite des lichtaussendenden Abschnitts (4) gegenüberliegende Innenwand des Rahmens (1) eine lichtreflektierende Platte (9) stützt.

11. Bildsensor nach Anspruch 1, wobei die transparente Abdeckung (3) innerhalb einer Aussparung untergebracht ist, die in dem Oberteil des Rahmens (1) gebildet ist.

12. Bildsensor nach Anspruch 11, wobei die oberen entgegengesetzten Seitenränder der transparenten Abdeckung (3) abgeschrägt sind, und wobei die Aussparung in Deckung zu den abgeschrägten Seitenrändern der transparenten Abdeckung (3) gebildet ist, so daß die abgeschrägten Seitenränder der transparenten Abdeckung (3) durch die inneren oberen Ränder des Rahmens (1) abgedeckt sind.

13. Elektronische Vorrichtung mit einem Bildsensor nach einem der vorangehenden Ansprüche.

## Revendications

1. Capteur d'image permettant d'envoyer des rayons lumineux sur un objet (W) devant être reproduit et de convertir les rayons lumineux réfléchis par l'objet (W) en des signaux électriques, ledit capteur d'image comprenant un couvercle transparent (3) sur lequel l'objet (W) peut être placé, une partie d'émission de lumière (4) servant à envoyer des rayons lumineux sur l'objet (W) à travers ledit couvercle transparent (3), une lentille de condenseur (6) destinée à recevoir et condenser les rayons lumineux réfléchis par l'objet (W) à travers ledit couvercle transparent (3), une partie de réception de lumière (5) servant à recevoir les rayons lumineux venant de ladite lentille de condenseur (6) et à convertir les rayons lumineux reçus en des signaux électriques, et un bâti (1) servant à monter ledit couvercle transparent (3) à une extrémité et à monter ladite partie d'émission de lumière (4), ladite lentille de condenseur (6) et ladite partie de réception de lumière (5), caractérisé en ce que ladite partie d'émission de lumière (4) est disposée de façon que les rayons lumineux émis par cette dernière entrent dans la surface dudit couvercle transparent (3) suivant une direction sensiblement perpendiculaire à celle-ci, et en ce que ladite lentille de condenseur (6) est disposée de façon que son axe optique soit incliné (angle Θ) par rapport à la surface dudit couvercle transparent (3), où ladite partie d'émission de lumière (4) et ladite partie de réception de lumière (5) sont montées sur une unique plaque de base (2), et la section droite dudit bâti (1) s'amincit en direction dudit couvercle transparent (3).

2. Capteur d'image selon la revendication 1, où ledit bâti (1) possède une paroi latérale placée du côté de ladite partie d'émission de lumière (4) et s'étendant perpendiculairement au plan dudit couvercle transparent (3), et une autre paroi latérale placée du côté de ladite partie de réception de lumière (5) et inclinée par rapport au plan dudit couvercle transparent (3).

3. Capteur d'image selon la revendication 2, où ladite autre paroi latérale placée du côté de ladite partie de réception de lumière (5) porte ladite lentille de condenseur (6).

4. Capteur d'image selon l'une quelconque des revendications précédentes, où la surface de ladite plaque de base (2) est réfléchissante autour de ladite partie d'émission de lumière (4).

5. Capteur d'image selon la revendication 4, où ladite surface de ladite plaque de base (2) est colorée en blanc autour de ladite partie d'émission de lumière (4).

6. Capteur d'image selon la revendication 5, où la partie inférieure dudit bâti (1) comporte une partie faisant saillie vers l'intérieur (1b) qui est formée de manière à être en contact avec une partie de la surface de ladite plaque de base (2), et où ladite plaque de base (2) est poussée et maintenue contre ladite partie faisant saillie vers l'intérieur (1b) par l'intermédiaire d'une lame de ressort (17) en contact avec l'envers de ladite plaque de base (2).

7. Capteur d'image selon la revendication 1, comprenant en outre une séparation (8) servant à diviser l'espace placé au-dessus de ladite plaque de base(2) en deux parties d'espace respectivement destinées à ladite partie d'émission de lumière (4) et à ladite partie de réception de lumière (5).

8. Capteur d'image selon la revendication 7, où ladite séparation (8) sert également d'élément de support de lentille à ladite lentille de condenseur.

9. Capteur d'image selon la revendication 8, où la surface dudit élément de support de lentille (8) est réfléchissante du côté de ladite partie d'émission de lumière (4).

10. Capteur d'image selon la revendication 9, où la paroi interne dudit bâti (1) se trouvant en regard de la surface dudit élément de support de lentille (8) porte une plaque de réflexion de lumière (9) du côté de ladite partie d'émission de lumière (4).

11. Capteur d'image selon la revendication 1, où ledit couvercle transparent (3) est logé à l'intérieur d'un évidement formé dans le dessus dudit bâti (1).

12. Capteur d'image selon la revendication 11, où les bords latéraux opposés de dessus dudit couvercle transparent (3) sont chanfreinés, et où ledit évidement est formé pour être apparié auxdits bords latéraux chanfreinés dudit couvercle transparent (3), de façon que lesdits bords latéraux chanfreinés dudit couvercle transparent (3) soient couverts par lesdits bords supérieurs internes dudit bâti (1).

13. Instrument électronique comprenant un capteur d'image selon l'une quelconque des revendications précédentes.
